# EUROPÄISCHE PATENTSCHRIFT

(11) **EP 2 106 408 B1**
(45) Veröffentlichungstag und Bekanntmachung des Hinweises auf die Patenterteilung: **07.07.2010**
(21) Anmeldenummer: 07856984.5
(22) Anmeldetag: 20.12.2007
(51) Int. Cl.: C08B 30/04

(54) **VERFAHREN ZUR HERSTELLUNG VON STÄRKE**
METHOD FOR THE PRODUCTION OF STARCH
PROCÉDÉ DE PRODUCTION D'AMIDON

(30) Priorität: 02.01.2007 DE 102007001319; 21.03.2007 DE 102007014057
(43) Veröffentlichungstag der Anmeldung: 07.10.2009
(73) Patentinhaber: Beta Tec Hopfenprodukte Gmbh, 90482 Nürnberg (DE)
(72) Erfinder: BACZYNSKI, Lilith, 91564 Neuendettelsau (DE); WIRTH, Tobias, 91126 Schwabach (DE)
(74) Vertreter: Stippl, Hubert
(86) Internationale Anmeldenummer: PCT/EP2007/011261
(87) Internationale Veröffentlichungsnummer: WO 2008/080566

(56) Entgegenhaltungen:
- EP-A- 1 044 988
- WO-A-00/53814
- WO-A-03/074431
- DE-A1- 2 214 495
- US-A- 2 322 413
- US-A- 5 336 414
- US-A- 5 882 713

## Beschreibung

**Stärke** (lat. *Amylum)* ist eine organische Verbindung und zwar ein Polysaccharid mit der Formel (C₆H₁₀O₅)ₙ, das aus Glucose-Einheiten besteht. Das Makromolekül zählt daher zu den Kohlenhydraten. Stärke ist einer der wichtigsten Inhaltsbestandteile pflanzlicher Zellen. Landpflanzen und Grünalgen speichern ihre überschüssige Energie als Reserve. Der Sinn der Stärkebildung ist hierbei die Speicherung der Glucose in unlöslicher Form.

Samenkörner, Knollen, Wurzeln, Früchte oder Mark dienen den Pflanzen als Speicherorgane. Dort sind jeweils viele Stärkemoleküle zu Stärkekörnern zusammengefasst.

Stärkemoleküle bestehen aus D-Glucose-Einheiten, die über glykosidische Bindungen miteinander verknüpft sind. Stärke besteht zu
- 10 bis 30 % aus Amylose: Lineare Ketten mit helicaler (Schrauben-)Struktur, die nur α-1,4-glycosidisch verknüpft sind und zu
- 70 bis 90 % aus Amylopektin: Stark verzweigten Strukturen, mit α-1,4-glycosidischen Verknüpfungen.

Stärke ist das wichtigste Kohlenhydrat in der Ernährung von Mensch und Tier. Darüber hinaus besitzt Stärke auch für die technische Industrie eine große Bedeutung. Weil dabei zunehmend fossile Rohstoffe ersetzt werden, zählt man Stärke auch zu den nachwachsenden Rohstoffen.

Man kann davon ausgehen, dass heute etwa zwei Drittel der erzeugten Stärke auf dem Nahrungsmittelsektor und der Rest auf verschiedenen technisch-industriellen Sektoren verwendet wird.

Stärke wird, abhängig vom geographischen Produktionsgebiet, aus den unterschiedlichsten Rohstoffen gewonnen. Zu den stärkehaltigen pflanzlichen Rohstoffen zählen Mais, Reis, Gerste, Weizen, Sago, Roggen, Hafer, Hirse, Maniok, Kartoffeln, Süßkartoffeln, Yamswurzel, Pfeilwurz, Wasserbrotwurzel, Canna und Tannia.

Mais ist der wichtigste pflanzliche Rohstoff für die Stärkegewinnung. Über 82 % der weltweit produzierten Stärke wird aus Mais gewonnen. Weizenstärke und Kartoffelstärke machen dagegen 9 % bzw. nur 6 % der weltweiten Stärkeproduktion aus. Alle anderen Rohstoffe haben zusammengenommen nur einen Anteil von 2 % an der globalen Stärkeproduktion. Die Maniokwurzel ist der wichtigste Rohstoff für Stärke im südostasiatischen Wirtschaftsraum.

### AUFGABENSTELLUNG

Im Rahmen der Herstellung von Stärke aus Mais wird entweder frischer Mais mit einer Feuchtigkeit bis zu 30 % (Nassmais) oder getrockneter Mais mit einer Feuchtigkeit bis zu 15 % als Rohstoff eingesetzt. Nassmais ist im Vergleich zu Trockenmais günstiger, allerdings nur wenige Tage lagerfähig. Bei Lagerung von Nassmais bilden sich Milchsäurebakterien, welche den Zucker im gelagerten Mais abbauen, wodurch es zu Lagerverlusten kommt. Des Weiteren werden bei zu langer Lagerung zu hohe Milchsäurekonzentrationen in den nachfolgenden Verarbeitungsprozess eingebracht, wo sie nicht mehr kontrolliert werden können und Schaden verursachen. Die Lagerzeiten von Nassmais im Rahmen der Herstellung von Stärke aus Mais betragen daher lediglich wenige Tage.

Im Zuge der Herstellung von Stärke aus Mais ist es ferner üblich, dem Prozessgut Schwefeldioxid zuzugeben, um die Milchsäureentwicklung in dem Verarbeitungsprozess zu kontrollieren. Allerdings kann es vorkommen, dass Schwefeldioxid von dem pflanzlichen Rohstoff aufgenommen wird, was unerwünscht ist. Ferner darf z.B. sogenannte Biostärke kein Gehalt an aufgenommenem Schwefeldioxid aufweisen. Zudem ist die zulässige Schwefeldioxidgabe bei einer starken Infektion mit thermophilen Milchsäurebakterien nicht immer ausreichend, um die Milchsäureentwicklung in gewünschtem Maße zu kontrollieren und Ausbeuteverluste sowie Beeinträchtigungen im Folgeprozess durch übermäßige Milchsäurebildung zu verhindern. Schließlich kann die Zugabe von Schwefeldioxid zu einer Geruchsbeeinträchtigung führen.

Es ist daher Aufgabe der vorliegenden Erfindung, ein Verfahren zur Verfügung zu stellen, welches die vorgenannten Probleme und Schwierigkeiten vermeidet.

### ERFINDUNG

Die vorstehende Aufgabe wird bei dem gattungsgemäßen Verfahren dadurch gelöst, dass während des Herstellungsverfahrens eine Wirksubstanz auf der Basis von Hopfen und/oder Baumharz (Kolophonium) und/oder einer Fettsäure und/oder eines Gemisches davon zugegeben wird. Die vorgenannte Wirksubstanz ist in der Lage, die Milchsäureproduktion zu beeinflussen und stellt daher ein besonders geeignetes Mittel für das vorliegende Verfahren dar.

Besonders vorteilhaft wirkt sich der Einsatz der Wirksubstanz bei der Lagerung von Mais, insbesondere bei ungetrocknetem Mais (frischem Mais oder Nassmais), aus. Durch Zugabe der Wirksubstanz zu Mais während der Lagerung desselben kann die Entwicklung von Milchsäurebakterien wirksam unterdrückt werden. Aufgrund dessen können Lagerverluste aufgrund Milchsäurebakterien-bedingtem Zuckerabbau vermieden werden. Ebenso kann der Eintrag von Milchsäurebakterien in den nachfolgenden Verarbeitungsprozesses limitiert, um eine kontrollierte Milchsäuregärung während des Quellprozesses zu gewährleisten. Die Zeitspanne der Lagerung von Mais, insbesondere Nassmais (ungetrockneter Mais), kann verlängert werden. Aufgrund der Reduzierung der Milchsäureentwicklung während der Lagerung kann die im nachfolgenden Herstellungsprozess, z. B. Quellprozess, einzusetzende Menge an Schwefeldioxid reduziert werden.

Zweckmäßigerweise wird die Wirksubstanz auf den zu lagernden Mais aufgesprüht, um die einzelnen Maiskörner möglichst vollständig mit Wirksubstanz im gelagerten Zustand zu bedecken.

Erfolgt das Aufsprühen der Wirksubstanz während des Befüllens des Lagerbehälters mit Mais, kann in vorteilhafter Weise ein Schichtenaufbau von mit Wirksubstanz bedeckten Maiskörnern innerhalb des Lagerbehälters erzielt werden.

Alternativ kann der Mais auch durch ein geeignetes Tauchbad geleitet werden.

Die Wirksubstanz kann auch in einem nach der Lagerung stattfindenden Weiterverarbeitungsprozess alternativ oder zusätzlich zur Zugabe bei der Lagerung hinzugegeben werden.

Insbesondere kann bei der Verarbeitung von Mais die Zugabe von Schwefeldioxid bzw. schwefeldioxidhaltigen Verbindungen durch die Zugabe der vorgenannten Wirksubstanz reduziert werden und aufgrund der reduzierten Menge die positiven Eigenschaften von Schwefeldioxid genutzt, jedoch die negativen Eigenschaften bei zu hohem Schwefeldioxid beseitigt werden. Die vorgenannte Wirksubstanz eignet sich daher in ganz hervorragender Weise für einen kombinatorischen Einsatz mit Schwefeldioxid.

Alternativ ist die Wirksubstanz im Bedarfsfall auch in der Lage, Schwefeldioxid vollständig zu ersetzen. Dieses ist insbesondere für die Herstellung von sogenannter Biostärke von ganz besonderer Bedeutung.

Zweckmäßigerweise handelt es sich bei der einzusetzenden Wirksubstanz insbesondere um Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder ein Gemisch davon.

Die vorliegende Erfindung betrifft des Weiteren ein Verfahren zur Herstellung von Stärke unter Einsatz von Mais mit folgenden Verfahrensschritten
(a) Zurverfügungstellung des Rohstoffs,
(b) Versetzen des Rohstoffs mit einem Quellmittel,
(c) Lagern des Rohstoffs mit dem Quellmittel in einem Behälter, wobei der Rohstoff einem Quellvorgang ausgesetzt ist,
(d) Hinzufügung einer Wirksubstanz zur Kontrolle der Milchsäureproduktion während des Quellvorgangs auf der Basis von Hopfen und/oder Baumharz und/oder einer Fettsäure und/oder eines Gemisches davon,
(e) Abziehen des Quellmittels,
(f) Entfernen des gequollenen Rohstoffs,
(g) Weiterverarbeitung des gequollenen Rohstoffs.

Es hat sich überraschenderweise herausgestellt, dass mit einer Wirksubstanz auf der Basis von Hopfen und/oder Baumharz und/oder einer Fettsäure bzw. eines Gemisches davon eine kontrollierte Milchsäuregärung im Quellwasser durchgeführt werden kann. Hierbei kann der Quellprozess aufgrund der Hinzufügung der vorgenannten Wirksubstanz mit einem im Vergleich zu herkömmlichen Verfahren deutlich reduzierten Schwefeldioxidanteil vorgenommen werden.

Alternativ kann auf die Schwefeldioxidzugabe auch vollständig verzichtet werden, insbesondere zur Herstellung von so genannter Biomaisstärke.

Die Wirksubstanz wird hierbei zweckmäßigerweise auf den Rohstoff, vorzugsweise während des Befüllens des Behältnisses zur Durchführung des Quellprozesses aufgesprüht.

Der Quellvorgang findet bei einem pH-Wert im Bereich von 3,0 - 5,5 statt. Die Temperatur liegt im Bereich von 35° C - 65° C, vorzugsweise 40° C - 60° C. Bei dem vorgenannten pH-Wertbereich und Temperaturbereich können thermophile Milchsäurebakterien wachsen. Hierfür ist der Einsatz der Wirksubstanz besonders geeignet.

Zweckmäßigerweise wird die Wirksubstanz am Quellmitteleintritt in den Behälter zugegeben werden. Alternativ ist allerdings auch eine je nach Milchsäureentwicklung beliebige Stelle entlang des Verlaufs einzelner Behälter möglich. Die Zugabe der Wirksubstanz kann gezielt und kontrolliert an jeder Stelle und zu jedem beliebigen Zeitpunkt des Quellprozesses vorgenommen und damit die Milchsäureentwicklung beeinflusst werden, d.h. kontrolliert.

Die vorliegende Erfindung betrifft des Weiteren den Einsatz der Wirksubstanz zur Verbesserung der Konditionen bei der Zwischenlagerung von Stärkemilch, die im Rahmen des Herstellungsverfahrens von Stärke anfällt.

Auch hierbei kann die Zugabe der Wirksubstanz als Ersatz oder zumindest Teilersatz von Schwefeldioxid und schwefeldioxidhaltigen Verbindungen erfolgen. Als Wirksubstanz kommen in vorteilhafter Weise Verbindungen wie Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder ein Gemisch davon zum Einsatz.

Eine weitere Ausgestaltung des vorliegenden Verfahrens betrifft die Herstellung von Stärke unter Einsatz eines natürlichen Getreiderohstoffs, insbesondere Gerste, Roggen, Hafer oder Weizen mit folgenden Verfahrensschritten
(a) Zurverfügungstellung des Rohstoffs, insbesondere in gemahlener Form,
(b) Versetzen des Rohstoffes mit Wasser zur Herstellung einer Paste,
(c) ggf. Ruhephase der Paste,
(d) Trennen der Stärke und Gluten,
(e) Weiterverarbeitung der Stärke,

wobei eine Wirksubstanz auf der Basis von Hopfen und/oder Baumharz und/oder einer Fettsäure oder eines Gemisches davon im Bereich der Verfahrensschritte (a) - (e) hinzugegeben wird. Das Verfahren gewährleistet eine Verhinderung oder zumindest Kontrolle der Milchsäurebildung bei der Zubereitung und/oder Weiterverarbeitung der Rohstoffpaste (z.B. Weizenmehlpaste oder Weizenmehlslurry).

Die Zugabe der Wirksubstanz auf Basis von Hopfen und/oder Baumharz und/oder einer Fettsäure oder eines Gemisches davon kann an jedem der Verfahrensschritte (a) - (e) je nach Notwendigkeit vorgenommen werden.

Insbesondere kann die Zugabe der vorgenannten Wirksubstanz auch zur Verhinderung einer Milchsäurebildung bei der Verzuckerung der sogenannten B-Stärke durchgeführt werden.

Die Zugabe der Wirksubstanz ermöglicht den Ersatz von in diesem Bereich bevorzugt eingesetztem Chlordioxid. Chlordioxid ist korrosiv und muss üblicherweise in einer auf dem Gelände, d. h. lokal vorgesehenen Anlage mit hierfür geschultem Personal erzeugt werden. Ebenso kann der Einsatz von Carbamaten vermieden werden, die gesundheitsbedenklich sind.

Ebenso kann die Zugabe der Wirksubstanz als Ersatz oder Teilersatz von Schwefeldioxid und schwefeldioxidhaltigen Verbindungen erfolgen.

Als Wirksubstanz wird zweckmäßigerweise Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder ein Gemisch davon zugegeben.

Die vorliegende Erfindung betrifft des Weiteren ein Verfahren zur Herstellung von Stärke unter Einsatz eines pflanzlichen Rohstoffs, insbesondere der Kartoffel oder Tapiokapflanze oder der Cassavapflanze, wobei dem pflanzlichen Rohstoff eine Wirksubstanz auf der Basis von Hopfen und/oder Baumharz und/oder einer Fettsäure oder eines Gemisches davon zugegeben wird.

Zweckmäßigerweise kann die Zugabe der Wirksubstanz im Rahmen der Zugabe von Wasser zur Verbesserung der Pumpfähigkeit der zerkleinerten Kartoffelstücke (Reibsel) erfolgen bzw. im Rahmen der Zugabe von Wasser zur Verbesserung der Pumpfähigkeit der verkleinerten Knollenstücke der Tapiokapflanze bzw. der Cassavapflanze erfolgen.

Die Zugabe der Wirksubstanz stellt ein Verfahren zur Verminderung der Kontaminanten während der Lagerung der Kartoffel, Kartoffelstücke bzw. Knollenstücke der Tapiokapflanze bzw. der Cassavapflanze dar.

Die Zugabe der Wirksubstanz bewirkt die Unterdrückung grampositiver Anaerobier (Clostridien), mikroaerophiler und/oder fakultativ anaerober Kontaminanten (Milchsäurebakterien, Bazillen).

Auch kann die Wirksubstanz in vorteilhafter Weise zur Kontrolle der Milchsäureentwicklung zugegeben werden.

Nachstehend wird die Erfindung anhand einzelner Beispiele wiedergegeben.

### BEISPIEL 1: LAGERUNG VON NASSMAIS

Die wirtschaftliche Größe von Maisstärkefabriken liegt zwischen 500 und 200 Tonnen Maisverarbeitung pro Tag. Mais- und Weizenstärkefabriken produzieren 365 Tage im Jahr. Im Gegensatz dazu arbeiten Kartoffelstärke- oder Zuckerfabriken nur während einer Kampagne unterschiedlicher Länge, da diese Rohstoffe nur begrenzt lagerfähig sind. Für die Stärkeproduktion wird überwiegend Gelbmais der Qualitätsstufen US-Yellow Nr. 2 und 3 verwendet. Meist wird getrockneter Mais mit einer Feuchtigkeit von 15 % als Rohstoff eingesetzt, da dieser mehrere Jahre ohne Schädigung lagerfähig ist. Stärkefabriken in Maisanbaugebieten verarbeiten während der Erntezeit auch häufig frischen, ungetrockneten Mais mit bis zu 30 % Feuchtigkeit, da dieser preisgünstiger zu beziehen ist. Dieser Mais ist nur wenige Tage lagerfähig.

Zur Lagerung von ungetrocknetem Mais vor der Verarbeitung wird dieser mit einer Wirksubstanz in Form eines Extrakts aus Hopfenharzen, aus Kiefernharz, einer Fettsäure oder Gemisches davon versetzt. Hierzu können insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon eingesetzt werden.

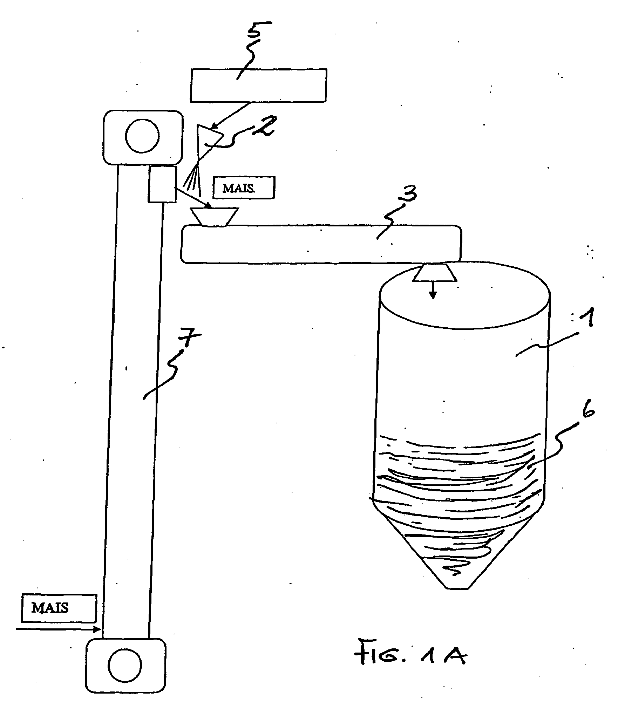

Gemäß FIG. 1 A wird Mais einem Elevator 7 zugeführt und von diesem in einen oberhalb eines Lagerbehälters 1 befindlichen Kettenförderer 3 überführt. Im Bereich der Überführung des Mais vom Elevator 7 zum Kettenförderer 3 ist eine Sprüheinrichtung 2 vorgesehen, die den in den Kettenförderer 3 fallenden Mais mit Wirksubstanz 5 besprüht. Die mit Wirksubstanz 5 besprühten Maiskörner durchlaufen den Kettenförderer 3 und fallen von diesem in den Lagerbehälter 1.

Hierdurch werden die einzubringenden Maiskürner umfänglich mit Wirksubstanz bedeckt und hierdurch innerhalb des Lagerbehälters 1 ein Schichtenaufbau 6 mit mit Wirksubstanz behandelten Maiskörnern geschaffen. Dies führt zu einer Verhinderung des Milchsäurebakterienwachstums und damit zu der Möglichkeit der Verlängerung der Lagerzeiten ohne die eingangs genannten Nachteile und zur Verhinderung von Lagerverlusten.

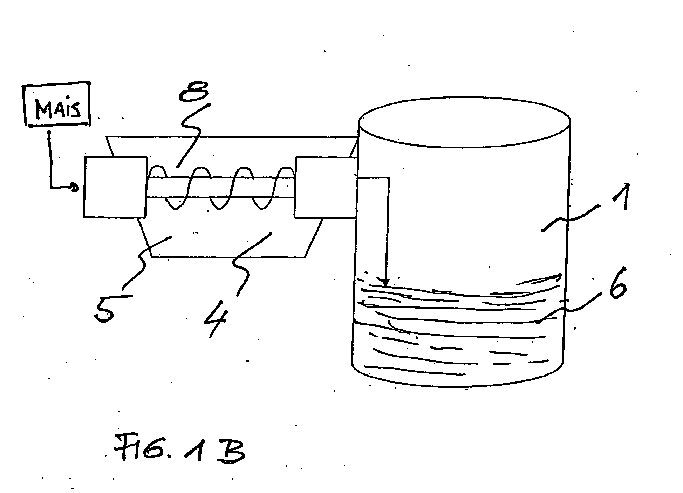

Alternativ kann, wie aus FIG. 1 B ersichtlich, die Wirksubstanz 5 auf die Maiskörner auch mittels eines geeigneten Tauchbads aufgebracht werden. Hierzu verläuft ein Schneckenförderer 8 z. B. durch das Tauchbad 4, in dem sich die Wirksubstanz 5 befindet, hindurch.

Die Wirksubstanz wird beispielsweise in einer wässrigen alkalischen Lösung eingebracht, beispielsweise einer wässrigen alkalischen Lösung von Kolophonium.

Für die Lagerung von Nassmais haben sich als Wirksubstanz Tetrahydro-iso-alpha-Säuren als ganz besonders geeignet herausgestellt.

Im Inneren des mit Mais befüllten Lagerbehälters (Silo) herrschen unterhalb der Oberfläche üblicherweise anaerobe Verhältnisse, so dass die Wirksubstanz in vorteilhafter Weise keinem Oxidationsprozess ausgesetzt ist.

### BEISPIEL 2: HERSTELLUNG VON STÄRKE AUS MAIS

Lagerfähige getrocknete Maiskörner sind zu hart, um in ihre technologischen Bestandteile aufgetrennt werden zu können. Daher wird der vorgereinigte Mais zunächst einem Quellprozess unterworfen. Dieser ist der wichtigste und zugleich komplizierteste Vorgang bei der Maisstärkegewinnung, da von ihm die Wirksamkeit der Auftrennung aller im Maiskorn vorliegenden Stoffe bestimmt wird.

Der gereinigte Mais wird während 30 - 50 Stunden mit 48° C - 50° C warmem Wasser behandelt. Bereits nach 8 - 12 h nimmt er seinen höchsten Wassergehalt von 42 % - 45 % an. Gleichzeitig mit der Wasseraufnahme diffundieren die löslichen Substanzen und biochemisch löslich gewordene Stoffe (Zucker, Peptide und Aminosäuren, Phytate, Mineralstoffe und Milchsäure) aus dem Mais in das Quellwasser. Bei einem pH-Wert von 3,8 - 4,5 und 48° C - 50° C können thermophile Milchsäurebakterien wachsen. Durch sie werden aus dem im Maiskom enthaltenen Zucker etwa 0,8 % - 1,5 % Milchsäure gebildet. Damit bei der Quellung keine unkontrollierten Abbauvorgänge ablaufen, gibt man dem Quellwasser (Prozesswasser aus späteren Abschnitten der Stärkegewinnung) 0,1 % - 0,3 % Schwefeldioxid zu. Schwefeldioxid lässt in dieser Konzentration nur noch eine kontrollierte Milchsäuregärung in Quellwasser zu. Das zugesetzte Schwefeldioxid und die mikrobiologisch gebildete Milchsäure steuern die beim Quellprozess ablaufenden Reaktionen. Dazu gehören vor allem der teilweise Abbau des Maisproteins und die Auflockerung der Proteinmatrix im hornigen Endosperm. Die Auflockerung dieser Matrix ist Voraussetzung für eine wirksame Trennung von Stärke und Protein.

Die Schwefeldioxidaufnahme durch den Mais ist unerwünscht und insbesondere im Bereich der Biostärken problematisch. Darüber hinaus ist die zulässige Schwefeldioxidgabe bei einer starken Infektion mit thermophilen Milchsäurebakterien nicht immer ausreichend, um die Milchsäureentwicklung in gewünschtem Maße zu kontrollieren und Ausbeuteverluste sowie Beeinträchtigungen im Folgeprozess durch übermäßige Milchsäurebildung zu verhindern.

Gemäß der Erfindung wird eine Kontrolle der Milchsäureentwicklung während der Quellung von Mais durch Zugabe eines Extraktes aus Hopfenharzen, aus Kiefernharz, einer Fettsäure oder Gemisches davon erreicht. Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon direkt dem Quellwasser zugegeben.

Hierdurch lässt sich die Menge an Schwefeldioxid reduzieren oder völlig ersetzen.

Technisch wird die Quellung in großen, runden Behältern aus Edelstahl durchgeführt, die am Auslauf komisch zulaufen. Bei der semikontinuierlichen Quellung werden meist mehrere Behälter eingesetzt. Der Mais bleibt im Quellbehälter liegen. Das Prozesswasser tritt von oben in den Quellbehälter ein, in dem er sich am längsten gequollenen Mais befindet und fließt kontinuierlich im Gegenstrom zur Quelldauer des Maises. Das Quellwasser fließt dann durch ein Siebrohr im konischen Teil des Quellbehälters ab und wird zum nächsten Behälter gepumpt. Nach dem Passieren der gesamten Behälterbatterie tritt das Quellwasser durch das Siebrohr des Quellbottichs mit frischem Mais aus und wird in einer Eindampfanlage konzentriert. Dieses sogenannte schwere Quellwasser wird als Bestandteil des Maisglutenfutters an Vieh verfüttert. Nach der vorgegebenen Zeit wird der Behälter mit dem fertig gequollenen Mais aus dem Quellschema herausgenommen und der Mais wird vermahlen. Dieser Behälter wird nun mit frischem Mais befüllt.

Bei einer kontinuierlichen Quellung in einem Behälter werden sowohl der Mais als auch das Quellwasser im Gegenstrom bewegt. Der frische Mais wird oben zugeführt und unten als gequollener Mais entnommen. Das Quellwasser wird unten zugeführt und verlässt oben als verbrauchtes Quellwasser den Behälter. Gemäß der vorliegenden Erfindung erfolgt eine Kontrolle der Milchsäureentwicklung während des Quellprozesses von Mais bei der Produktion von Biostärke und eine Kontrolle der Milchsäureentwicklung und Minimierung der Schwefeldioxidgabe während des Quellprozesses von Mais durch Verwendung eines Extraktes aus Hopfenharzen, aus Kiefernharz, einer Fettsäure oder Gemischen davon.

Dabei können insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon im Falle einer semikontinuierlichen Quellung mit Hilfe einer Dosierpumpe dem Quellwasser je nach Milchsäureentwicklung an jeder beliebigen Stelle des Flusses durch die Quellbottiche zugesetzt werden. Im Falle einer kontinuierlichen Quellung können die Hopfenharze mit Hilfe einer Dosierpumpe am Quellwassereintritt oder an verschiedenen Stellen des Quellbottichs zudosiert werden. So kann die Milchsäureentwicklung gezielt und kontrolliert an jeder Stelle und zu jedem Zeitpunkt des Quellprozesses beeinflusst werden.

Der gequollene Mais wird mittels Zahnscheibenmühlen grob vermahlen, so dass die durch die Quellung elastisch gewordenen Keime möglichst unversehrt freigelegt werden. Die abgetrennten Keime schwimmen in der Stärkemilch auf und werden im Oberlauf zweier hintereinander geschalteter Hydrozyklone aufgefangen. Dagegen sinken die Stärke, die Fasern und das Mahlgut ab und werden im Unterlauf der Hydrozyklone ausgeschwemmt.

Die restliche Stärke wird durch Waschung auf Bogensieben von den Maiskeimen entfernt. Anschließend werden die Maiskeime entwässert, getrocknet und der Ölgewinnung zugeführt.

Die von Keimen befreite Maissuspension wird dann fein vermahlen. Durch die Feinvermahlung wird die in Zellen eingeschlossene Stärke freigelegt. Danach werden die gröberen Schalen und Fasern in mehrstufigen Bogensiebstationen von der Mühlenstärke abgetrennt. Das Faser- und Schalenmaterial wird dann nochmals auf Spaltsieben mit Prozesswasser im Gegenstrom ausgewaschen, um die anhaftende Stärke möglichst vollständig auszuwaschen. Die Schalen und Fasern werden mit Schneckenpressen auf ein Trockensubstanzgehalt von 45 % entwässert. Danach erfolgt die Antrocknung von konzentriertem Maisquellwasser auf die Maisfasern zur Herstellung von Maisfutter. Bei der Trocknung werden üblicherweise starke Gerüche frei, die von den Inhaltsstoffen, vor allem dem Schwefeldioxid des Maisquellwassers herrühren. Hierzu sind üblicherweise verfahrenstechnische Einrichtungen notwendig, um die Geruchsbildung zu verhindern. Die Erfindung erlaubt es, diese Geruchsbildung zu verhindern oder zumindest erheblich zu reduzieren.

Die vorliegende Erfindung stellt somit auch ein Verfahren zur Verminderung des technischen Aufwandes zur Geruchseliminierung bereit, indem während des Quellprozesses von Mais unter Verwendung eines Extraktes aus Hopfenharzen, aus Kiefernharz, einer Fettsäure oder Gemischen davon die Verwendung von Schwefeldioxid minimiert werden kann.

Nach der Abtrennung der Schalen- und Faserbestandteile durchläuft die Mühlenstärke zunächst einen Entsandungszyklon. Anschließend wird sie unter Ausnutzung des spezifischen Gewichtes mit Hilfe von Multizyklonen in die drei Phasen Stärke, Gluten und Lösliches aufgetrennt. Dabei gelangen Gluten und Lösliches als leichte Phase in den Oberlauf und die Stärkemilch wird als schwere Phase im Unterlauf abgetrennt.

Das Gluten wird in einem zweiten Schritt vorentwässert und aufkonzentriert. Das abgetrennte Prozesswasser wird als Quellwasser für die Maisquellung verwendet. Das konzentrierte Gluten wird weiter entwässert, getrocknet, evtl. pelletiert und als Eiweißkomponente in Tierfuttermischungen verwendet. Aus hochprozentigem Gluten werden auch Suppenwürzen und Glutaminsäurepräparate hergestellt.

Die Stärkemilch, die nach der Primärseparation des Glutens angefallen ist, wird in mehrstufigen Multizyklonanlagen einem intensiven Waschprozess im Gegenstrom unterworfen. Durch den Waschprozess wird der Proteingehalt auf 0,3 % und der Aschegehalt auf 0,1 % reduziert und die Stärke aufkonzentriert. Die raffinierte Stärkemilch enthält 40 % - 42 % Trockensubstanz und ist Rohstoff für viele weitere Produkte, so z.B. native und modifizierte Stärken, Stärkeverzuckerungsprodukte, Fermentationsprodukte wie Alkohol, Zitronensäure etc.. Nebenströme der Stärkeherstellung sind daher, da sie nicht so sehr mit Milchsäurebakterien belastet sind, leichter weiterverarbeitbar.

Die vorliegende Erfindung stellt gleichzeitig auch ein Verfahren zur Verhinderung von Milchsäurebildung bei der Zwischenlagerung von Stärkemilch vor und während der Weiterverarbeitung zu modifizierter Stärke, zu Stärkeverzuckerungsprodukten und zu Fermentationsprodukten bereit, unter Verwendung eines Extraktes aus Hopfenharzen, aus Kiefernharz, einer Fettsäure oder Gemisches davon die Verwendung von Schwefeldioxid reduziert oder vermieden werden kann.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon in ausreichender Konzentration dem Zwischenlagertank beigemischt.

### BEISPIEL 3: HERSTELLUNG VON STÄRKE AUS WEIZENSTÄRKE

Weizen setzt sich aus dem Mehlkörper, dem Keimling, den Aleuronzellen und der Samenschale zusammen. Der Mehlkörper macht beim Weizen ca. 83 % aus und liegt dabei in der gleichen Größenordnung wie beim Mais. Die Weizenstärke ist im Mehlkörper vertreten. Allerdings ist das Weizeneiweiß ebenfalls zum überwiegenden Teil im Mehlkörper eingelagert. Daher erfordert Weizen als Rohstoff für die Stärkegewinnung einen völlig anderen Prozess als Mais.

Der Weizen wird zunächst trocken zu Mehl vermahlen. Dabei werden die Fasern und evtl. Keime soweit sie möglich müllereitechnisch abgetrennt. Die anfallende Weizenkleie dient zur Futtererzeugung.

Für die Stärke- und Glutengewinnung kommt dann ein Nassverfahren zur Anwendung. Weizen ist die einzige Getreideart, bei der Gluten in Verbindung mit Wasser eine viskoelastische Masse bildet. Wenn man Weizenmehl mit Wasser zu einem Teig knetet und diesen Teig unter Rollen mit Wasser auswäscht, lässt sich die Stärke sehr leicht entfernen. Der Weizengluten (Kleber) bleibt als viskoelastische Masse zurück. Weizenkleber ist ein sehr hochwertiges Protein und wird deutlich teurer bezahlt als Maisgluten. Für die Ausbildung dieses Glutens und seine Abtrennung sind unterschiedliche Verfahrenstechniken entwickelt worden. Im Gegensatz zur Maisstärke gibt es bei der Weizenstärkegewinnung noch keine einheitliche Prozessführung.

In älteren MARTIN-Verfahren wird dem Weizenmehl etwa 60 % Wasser von 21° C - 27° C zugesetzt. Anschließend wird eine Teigruhezeit von ca. 30 Min. zur vollständigen Hydratisierung des Glutens eingehalten. Die Trennung von Stärke und Kleber erfolgt in sogenannten Teigextraktoren unterschiedlicher Bauart. Während des intensiven Knetens des Teiges im Wasser wird die gesamte Stärke ausgespült. Beim MARTIN-Verfahren wird sehr viel Wasser benötigt (8 m³ - 12 m³ pro Tonne Weizenmehl).

Im heute üblichen Slurry-Verfahren wird das Weizenmehl in speziellen kontinuierlichen Mischmaschinen zu einem Slurry verarbeitet. Dabei wird dem Mehl etwa 90 % Wasser von maximal 55° C zugesetzt. Der entstehende Slurry ist von pastenartiger, glatter Konsistenz. Nach einer kurzen Teigruhezeit zur Agglomerisierung des Glutens erfolgt die Trennung von Stärke und Gluten in Hydrozyklonen oder Dekantem.

Gemäß der vorliegenden Erfindung erfolgt eine Verhinderung von Milchsäurebildung oder zumindest Kontrolle der Milchsäurebildung bei der Bereitung von Weizenmehlslurry zur Abtrennung von Weizenkleber von der A-Stärke durch die Verwendung eines Extraktes aus Hopfenharzen, aus Kiefernharz, einer Fettsäure oder Gemischen davon.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon in ausreichender Konzentration dem Mischer beigegeben.

Weizen ist der einzige Stärkenrohstoff, der zwei Fraktionen an Stärkekörnern besitzt. Die großen Stärkekörner (25 µm - 50 µm) werden als A-Stärke bezeichnet und machen ca. 90 % aus, die kleinen Stärkekörner (2 µm - 15 µm) werden als B-Stärke bezeichnet und machen ca. 10 % aus. B-Stärke enthält außerdem Pentosane und Hemicellulosen. Beim Slurry-Verfahren unterteilt man daher die B-Stärke häufig in die sogenannte A-minus Stärke (kleine Stärkekörner) und C-Stärke (kleine Stärkekörner mit Hemicellulosen und Pentosanen). Häufig werden bei der Herstellung des Slurry Enzymmischungen eingesetzt (Hemicellulase, Pentosanase, Xylanase), um den Prozess zu vereinfachen und bessere Stärkeausbeuten zu erzielen.

In der ersten Trennstufe bildet A-Stärke die schwere Phase. Gluten und B-Stärke werden mit der leichten Phase ausgetragen.

Nach der Abtrennung der A-Stärke werden restliche Glutenpartikel und Fasern aus der A-Stärkemilch ausgewaschen und abgesiebt. In der Stärkeraffination wird die A-Stärkemilch, die noch geringe Mengen Feinkomstärke, Protein, sowie Lösliches und Feinfasern enthält, einem intensiven Waschprozess sowie einer Konzentrierung unterworfen. Durch den Waschprozess wird der Proteingehalt auf 0,3 % und der Aschegehalt auf 0,1 % reduziert. In der letzten Stufe der Multizyklonbatterien oder der Separatoren-Stationen wird Frischwasser zugegeben. Die Waschwassermenge beträgt ca. 2,5 m³ pro Tonne Weizenmehl. Die raffinierte Stärkemilch besitzt eine Konzentration von 40 % - 42 % TS. Diese A-Stärkemilch ist Rohstoff für viele weitere Produkte: Native und modifizierte Stärken, Stärkeverzuckerungsprodukte, Fermentationsprodukte etc.

Die Trennung zwischen Gluten und B-Stärke erfolgt auf einem Bogensieb. Gluten bildet auf der Sieboberfläche die typische viskoelastische Masse, während die B-Stärkemilch, das Sieb passiert.

Häufig scheut man den Aufwand zur Aufarbeitung der B-Stärke in A-minus-(Kleinkornstärke) und C-Stärke. In diesem Fall wird die B-Stärke gemeinsam mit den Pentosanen und Fasern hydrolysiert um durch Fermentation Alkohol zu gewinnen. Eine weitere Option ist die Klärung und Eindampfung des unreinen Stärkesirups, um ihn anschließend als Futtermittel an die Weizenkleie anzutrocknen.

Gemäß der vorliegenden Erfindung wird auch eine Verhinderung von Milchsäurebildung bei der Verzuckerung der B-Stärke, der Pentosane und der Fasern durch Zugabe eines Extraktes aus Hopfenharzen, aus Kiefernharz, einer Fettsäure oder Gemischen davon erreicht.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon in ausreichender Konzentration einem oder mehreren Produktströmen vor der Verzuckerung oder aber dem Verzuckerungstank beigegeben (Ethanolprozess).

Der Feuchtkleber wird meist zu Vitalkleber getrocknet. Ähnlich wie Stärke wird auch Gluten enzymatisch und chemisch modifiziert zu diversen Produkten verarbeitet, u.a. als Backzutat für die Suppenwürze-Industrie, für Kälber-Aufzugsfutter und als Klebstoff.

Das Prozesswasser, das bis zu 8 % der Mehlstoffe enthalten kann, muss im MARTIN-Verfahren einer anaeroben Abwasserbehandlung unterzogen werden. Im Slurry-Verfahren ist der Anteil löslicher Stoffe so hoch, dass sich das Prozesswasser auf 20 % - 25 % TS eindampfen lässt. Dieses Konzentrat ist ein wertvolles *Flüssigfutter. Alternativ kann es an die Kleie aus der Vermahlung angetrocknet werden.

### BEISPIEL 4: HERSTELLUNG VON STÄRKE AUS KARTOFFELN

Die Kampagnezeit für Kartoffelstärke liegt bei ca. 120 Tagen. Als Rohstofflieferant für Stärke hat die Kartoffel eine bedeutende Rolle. Kartoffelstärke wird vor allem wegen ihrer besonderen physikalischen und kolloidchemischen Eigenschaften gewonnen. Die chemische Zusammensetzung der Kartoffel schwankt in weiten Grenzen. Kartoffeln enthalten durchschnittlich 19 % Stärke, jedoch können die Stärkegehalte zwischen 8 % - 30 % schwanken. Industriekartoffeln für die Stärkegewinnung sollen einen mittleren Stärke-Trockensubstanzgehalt von 17 % - 19 % aufweisen. Solche Kartoffeln geben Ausbeuten zwischen 20 % und 25 % Stärke mit einem handelsüblichen Feuchtegehalt von 20 %.

Gemäß der vorliegenden Erfindung wird eine Verminderung der Kontaminanten während der Lagerung von Kartoffeln durch Zugabe eines Extraktes aus Hopfenharzen, aus Kiefernharz, einer Fettsäure oder Gemischen davon erreicht.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon mittels einer Sprühvorrichtung während der Aufschüttung der Kartoffeln aufgesprüht.

Nach der Reinigung der Kartoffeln in Schwemmrinnen und Trommel- oder Trogwäschen erfolgt die Zerkleinerung der Kartoffeln fast ausnahmslos mit Sägeblattreiben. Dabei sollen die Zellen geöffnet werden, damit die Stärkekörner herausgewaschen werden können.

Dem Reibsel wird üblicherweise vielfach schwefeldioxidhaltiges Wasser zugesetzt, um die Pumpfähigkeit zu verbessern und die Braunfärbung zu verhindern. Durch Eindringen von Luftsauerstoff in die Kartoffelzellen kann die pflanzliche Aminosäure Tyrosin zum braunen Farbstoff Melanin umgesetzt werden. Alternativ dazu kann die Verfärbung durch Ausführen des Reibens, der Fruchtwasserabtrennung und der Stärkeauswaschung unter Vakuum verhindert werden.

Nach der Zerkleinerung wird das Kartoffelfruchtwasser möglichst vollständig abgetrennt, um den Frischwasserverbrauch und damit die Abwassermengen so gering wie möglich zu halten. Die Abtrennung des Fruchtwassers erfolgt häufig über einstufige Dekanter. Das Kartoffelreibsel wird pro Tonne Kartoffeln mit 400 Litern Prozesswasser aus der Stärkeraffination verdünnt. Das verdünnte Fruchtwasser wird stärkefrei aus dem Reibsel als leichte Phase abgetrennt. Setzt man einen zweistufigen Dekanter ein, erreicht man gleich hohe Abscheidegrade (94 %) bei ca. 15 % geringerer Verdünnung.

Das Fruchtwasser enthält lösliches Protein, das über den pH-Wert koaguliert und ausgefällt werden kann. Es dient als Viehfutter und ist wegen seines hohen Alkaloidgehaltes nicht für die menschliche Ernährung geeignet. Nach der Eiweißgewinnung wird das Fruchtwasser durch Umkehrosmose aufkonzentriert und das konzentrierte, lagerfähige Restfruchtwasser aufgrund seines hohen Stickstoff-, Phosphor- und Kaliumgehaltes als Flüssigdünger verwendet (PPL potato protein liquid).

Die Auswaschung der Kartoffelstärke aus der Faser (Kartoffelpülpe) erfolgt auf Zentrifugalsieben. Die extrahierte Stärkemilch verlässt den Siebkorb als Filtrat, während die Kartoffelpülpe als Siebüberschlag austritt. Die Auswaschstationen sind üblicherweise mehrstufig konstruiert.

Die Rohstärkemilch aus der Extraktion enthält neben den Stärkekömem unlösliche Verunreinigungen, wie Sand und Feinfasern und löslicher Verunreinigungen, wie Proteine, Aminosäuren, Lipide und Salze. Zunächst wird der Sand in Entsandungszyklonen als schwerste Komponente abgetrennt.

Anschließend wird die Rohstärkemilch in Düsenseparatoren oder einer Multizyklonanlage aufkonzentriert. Der stärkefreie Oberlauf enthält nur lösliche Bestandteile und wird zur Verdünnung des Kartoffelreibsels vor der Fruchtwasserabtrennung benutzt.

Gemäß der vorliegenden Erfindung wird eine Unterdrückung grampositiver Anaerobier (Clostridien), mikroaerophiler und fakultativ anaerober Kontaminanten (Milchsäurebakterien, Bazillen) bei der Verarbeitung von Kartoffeln zur Kartoffelreibsel unter Vakuum durch Zugabe eines Extraktes aus Hopfenharzen, aus Kiefernharz, einer Fettsäure oder Gemischen davon erreicht.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon dem Kartoffelreibsel oder der Rohstärkemilch in ausreichender Konzentration beigegeben.

Ferner ermöglicht die vorliegende Erfindung die Kontrolle der Milchsäureentwicklung während der Verarbeitung von Kartoffeln zur Kartoffelreibsel, unter Verwendung eines Extraktes aus Hopfenharzen, aus Kiefernharz, einer Fettsäure oder Gemischen davon.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon dem Kartoffelreibsel oder der Rohstärkemilch in ausreichender Konzentration beigegeben.

Danach erfolgt die Stärkeauswaschung in mehrstufigen Gegenstromsystemen aus Düsenseparatoren oder Multizyklonen. Die Feinfasern und löslichen Verunreinigungen werden mit dem Oberlauf ausgetragen. Die gereinigte Stärkemilch hat eine Konzentration von 40 % TS. In einigen Fällen führt man mit Hilfe von 3 Phasen-Düsen Separatoren eine Klassierung von Grob- und Feinstärkepartikeln im Verhältnis 3:1 durch. Bei der Raffination von Kartoffelstärke muss enthärtetes Wasser verwendet werden, da verschiedene Eigenschaften der Kartoffelstärke von einwertigen Kationen an den Phosphatestergruppen der Amylopektinfraktion abhängen. Diese einwertigen Ionen dürfen nicht durch Calcium- oder Magnesiumionen ausgetauscht werden.

Die Feinfaser aus den Oberläufen wird mit Zentrifugalsieben abgesiebt und nochmals auf Stärke ausgewaschen. Die Feinfaser gelangt zur Pülpe und die abgewaschene Stärke wird in die Vorstufen der Stärkeauswaschung zurück geführt. Die Kartoffelpülpe wird über Zentrifugalsiebe entwässert. Sie kann als proteinreiches Viehfutter direkt verfüttert oder sauer siliert werden.

### BEISPIEL 5: HERSTELLUNG VON STÄRKE AUS DER TAPIOKAPFLANZE

Tapioka- oder Cassavastärke wird aus den knollenförmigen Wurzeln der Maniok- oder Cassavapflanze gewonnen, die in tropischen und subtropischen Gebieten angebaut wird. Zur Stärkegewinnung werden die Wurzelstöcke verwendet, die bis zu 1 m lang und 20 cm dick werden. Sie sind von einer braunen Haut umgeben, unter eine 2 mm - 3 mm dicke gelbliche Rinde liegt. Man unterscheidet einen bitteren und einen süßen Maniok-Grundtyp. Für industrielle Zwecke wird das bittere Maniok angebaut, da diese mehr Stärke enthält. Bitterer Maniok enthält außerdem das Blausäureglykosid Linamarin, bei dessen Zerfall giftige Blausäure frei wird. Bei der Herstellung von Tapiokastärke verflüchtigt sich die Blausäure im Laufe des Verfahrens. Der Tapiokastärkeprozess ist heute weitgehend identisch mit dem der Kartoffelstärke.

Gemäß der vorliegenden Erfindung wird eine Verminderung der Kontaminanten während der Lagerung von Maniokknollen durch Zugabe eines Extraktes aus Hopfenharzen, aus Kiefernharz, einer Fettsäure oder Gemischen davon erreicht.

Dabei werden insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon mittels einer Sprühvorrichtung während der Aufschüttung der Kartoffeln aufgesprüht.

Ferner ermöglicht vorliegende Erfindung die Unterdrückung von grampositiven Kontaminanten bei der Verarbeitung von Maniok zur Tapiokastärke ebenfalls durch Zugabe eines Extraktes aus Hopfenharzen, aus Kiefernharz, einer Fettsäure oder Gemischen davon.

Dabei werden ebenfalls insbesondere Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren insbesondere Myristinsäure oder das Gemisch davon dem Maniokreibsel oder der Rohstärkemilch in ausreichender Konzentration beigegeben.

### BEZUGSZEICHENLISTE

- 1: Lagerbehälter
- 2: Sprüheinrichtung
- 3: Kettenförderer
- 4: Tauchbad
- 5: Wirksubstanz
- 6: Schichtenaufbau
- 7: Elevator
- 8: Schneckenförderer

## Patentansprüche

1. Verfahren zur Herstellung von Stärke unter Einsatz eines pflanzlichen Rohstoffs, aus dem die Stärke gewonnen werden soll,
**dadurch gekennzeichnet, dass**
während des Herstellungsverfahrens eine Wirksubstanz auf der Basis von Hopfen und/oder Baumharz und/oder einer Fettsäure oder eines Gemisches davon zugegeben wird.

2. Verfahren nach Anspruch 1,
**dadurch gekennzeichnet, dass**
als pflanzlicher Rohstoff Mais vorgesehen ist und zur Lagerung von Mais eine Wirksubstanz auf der Basis von Hopfen und/oder Baumharz und/oder einer Fettsäure oder eines Gemisches davon zugegeben wird.

3. Verfahren nach Anspruch 2,
**dadurch gekennzeichnet, dass**
es sich bei Mais um Nassmais handelt.

4. Verfahren nach Anspruch 2 oder 3,
**dadurch gekennzeichnet, dass** die Wirksubstanz auf den zu lagernden Mais aufgesprüht wird.

5. Verfahren nach Anspruch 4,
**dadurch gekennzeichnet, dass**
das Aufsprühen der Wirksubstanz während des Befüllens des Lagerbehälters mit Mais erfolgt.

6. Verfahren nach Anspruch 2 oder 3,
**dadurch gekennzeichnet, dass**
die Wirksubstanz auf den zu lagernden Mais mittels eines Tauchbads aufgebracht wird.

7. Verfahren nach Anspruch 1 oder 2,
**dadurch gekennzeichnet, dass** die Zugabe der Wirksubstanz als Teilersatz von Schwefeldioxid oder schwefeldioxidhaltigen Verbindungen erfolgt.

8. Verfahren nach Anspruch 1,
**dadurch gekennzeichnet, dass**
die Zugabe der Wirksubstanz als vollständiger Ersatz von Schwefeldioxid oder schwefeldioxidhaltigen Verbindungen erfolgt.

9. Verfahren nach einem der vorhergehenden Ansprüche,
**dadurch gekennzeichnet, dass**
durch Zugabe der Wirksubstanz die Milchsäureproduktion im Rahmen des Herstellungsverfahrens kontrolliert wird.

10. Verfahren nach einem der vorhergehenden Ansprüche,
**dadurch gekennzeichnet, dass**
es sich bei der Wirksubstanz um Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren, insbesondere Myristinsäure oder ein Gemisch davon handelt.

11. Verfahren zur Herstellung von Stärke unter Einsatz eines pflanzlichen Rohstoffs, insbesondere Mais, mit folgenden Verfahrensschritten
(a) Zurverfügungstellung des Rohstoffs,
(b) Versetzen des Rohstoffs mit einem Quellmittel,
(c) Lagern des Rohstoffs mit dem Quellmittel in einem Behälter, wodurch der Rohstoff einem Quellvorgang ausgesetzt ist,
(d) Hinzufügung einer Wirksubstanz zur Kontrolle der Milchsäureproduktion während des Quellvorgangs auf der Basis von Hopfen und/oder Baumharz und/oder einer Fettsäure und/oder eines Gemisches davon,
(e) Abziehen des Quellmittels,
(f) Entfernen des gequollenen Rohstoffs,
(g) Weiterverarbeitung des gequollenen Rohstoffs.

12. Verfahren nach Anspruch 11,
**dadurch gekennzeichnet, dass**
die Hinzufügung der Wirksubstanz zur Reduzierung oder Vermeidung der Zugabe einer weiteren Wirksubstanz zur Kontrolle der Milchsäureproduktion vorgenommen wird.

13. Verfahren nach Anspruch 12,
**dadurch gekennzeichnet, dass**
es sich bei der weiteren Wirksubstanz um Schwefeldioxid oder eine schwefeldioxidhaltige Verbindung handelt.

14. Verfahren nach den Ansprüchen 10 -13,
**dadurch gekennzeichnet, dass**
die Wirksubstanz dem Quellmittel zugegeben wird.

15. Verfahren nach den Ansprüchen 11 -14,
**dadurch gekennzeichnet, dass**
der Quellvorgang bei einem pH-Wert im Bereich von ca. 3,0 - 5,5 stattfindet.

16. Verfahren nach den Ansprüchen 11-15,
**dadurch gekennzeichnet, dass**
der Quellvorgang bei einer Temperatur im Bereich von 35° C - 65° C, vorzugsweise 40° C - 60° C, stattfindet.

17. Verfahren nach den Ansprüchen 11 - 16,
**dadurch gekennzeichnet, dass**
die Wirksubstanz am Quellmitteleintritt in den Behälter zugegeben wird.

18. Verfahren nach den Ansprüchen 11-17,
**dadurch gekennzeichnet, dass**
die Wirksubstanz an Zwischenpositionen entlang des Quellprozesses zugegeben wird.

19. Verfahren zur Zwischenlagerung von Stärkemilch, die im Rahmen eines Herstellungsverfahrens von Stärke anfällt,
**dadurch gekennzeichnet, dass**
der Stärkemilch eine Wirksubstanz auf der Basis von Hopfen und/oder Baumharz und/oder einer Fettsäure und/oder eines Gemisches davon zugegeben wird.

20. Verfahren nach Anspruch 19,
**dadurch gekennzeichnet, dass**
als Wirksubstanz Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren, insbesondere Myristinsäure oder ein Gemisch davon zugegeben wird.

21. Verfahren zur Herstellung von Stärke unter Einsatz eines natürlichen Getreiderohstoffs, insbesondere Gerste, Roggen, Hafer oder Weizen mit folgenden Verfahrensschritten
(a) Zurverfügungstellung des Rohstoffs, insbesondere in gemahlener Form,
(b) Versetzen des Rohstoffs mit Wasser zur Herstellung einer Paste,
(c) ggf. Ruhephase der Paste,
(d) Trennen der Stärke und Gluten,
(e) Weiterverarbeitung der Stärke,
wobei eine Wirksubstanz auf der Basis von Hopfen und/oder Baumharz und/oder einer Fettsäure oder eines Gemisches davon im Bereich der Verfahrensschritte (a) - (e) hinzugegeben wird.

22. Verfahren nach Anspruch 21,
**dadurch gekennzeichnet, dass**
die Zugabe als Ersatz oder Teilersatz von Chlordioxid oder Carbamaten erfolgt.

23. Verfahren nach Anspruch 21 oder 22,
**dadurch gekennzeichnet, dass**
als Wirksubstanz Alpha-Säuren, Beta-Säuren, Iso-alpha-Säuren, Dihydroiso-alpha-Säuren, Tetrahydroiso-alpha-Säuren, Hexahydroiso-alpha-Säuren, Hexahydro-beta-Säuren, Kolophonium, Fettsäuren, insbesondere Myristinsäure oder ein Gemisch davon zugegeben wird.

24. Verfahren zur Herstellung von Stärke unter Einsatz eines pflanzlichen Rohstoffes, insbesondere der Kartoffel oder der Tapiokapflanze oder der Cassavapflanze, wobei der pflanzliche Rohstoff zwischen oder während der Verarbeitungsstufen gelagert wird,
**dadurch gekennzeichnet, dass**
dem pflanzlichen Rohstoff eine Wirksubstanz auf der Basis von Hopfen und/oder Baumharz und/oder einer Fettsäure oder eines Gemisches davon zugegeben wird.

25. Verfahren nach Anspruch 24,
**dadurch gekennzeichnet, dass**
die Zugabe der Wirksubstanz als Ersatz oder Teilersatz von Schwefeldioxid oder schwefeldioxidhaltigen Verbindungen erfolgt.

26. Verfahren nach Anspruch 24 oder 25,
**dadurch gekennzeichnet, dass**
die Zugabe im Rahmen der Zugabe von Wasser zur Verbesserung der Pumpfähigkeit der zerkleinerten Kartoffelstücke (Reibsel) erfolgt bzw. der verkleinerten Knollenstücke der Tapiokapflanze bzw. der Cassavapflanze erfolgt.

27. Verfahren nach den Ansprüchen 24 - 26,
**dadurch gekennzeichnet, dass**
die Zugabe der Wirksubstanz zur Unterdrückung grampositiver Anaerobier (Clostridien), mikroaerophiler und/oder fakultativ anaerober Kontaminanten (Milchsäurebakterien, Bazillen) erfolgt.

28. Verfahren nach den Ansprüchen 24 - 27,
**dadurch gekennzeichnet, dass**
die Zugabe der Wirksubstanz zur Kontrolle der Milchsäureentwicklung erfolgt.

## Claims

1. Method for the production of starch using a vegetable raw material from which the starch is to be isolated,
**characterized in that**
an active substance based on hops and/or tree resin and/or a fatty acid or a mixture thereof is added during the production process.

2. Method according to Claim 1,
**characterized in that**
as vegetable raw material, maize is provided and for storage of maize an active substance based on hops and/or tree resin and/or a fatty acid or a mixture thereof is added.

3. Method according to Claim 2,
**characterized in that**
maize is wet maize.

4. Method according to Claim 2 or 3,
**characterized in that**
the active substance is sprayed onto the maize to be stored.

5. Method according to Claim 4,
**characterized in that**
spraying of the active substance proceeds during charging of the storage vessel with maize.

6. Method according to Claim 2 or 3,
**characterized in that**
the active substance is applied to the maize to be stored by means of an immersion bath.

7. Method according to Claim 1 or 2,
**characterized in that**
the addition of the active substance is carried out as partial replacement of sulphur dioxide or compounds comprising sulphur dioxide.

8. Method according to Claim 1,
**characterized in that**
the addition of the active substance is carried out as total replacement of sulphur dioxide or compounds comprising sulphur dioxide.

9. Method according to one of the previous claims,
**characterized in that**
the production of lactic acid within the context of the production process is controlled by addition of the active substance.

10. Method according to one of the previous claims,
**characterized in that**
the active substance is alpha-acids, beta-acids, iso-alpha-acids, dihydroiso-alpha-acids, tetrahydroiso-alpha-acids, hexahydroiso-alpha-acids, hexahydro-beta-acids, rosin, fatty acids, in particular myristic acid or a mixture thereof.

11. Method for the production of starch using a vegetable raw material, especially maize, with the following method steps
(a) provision of the raw material,
(b) treatment of the raw material with a steeping agent,
(c) storage of the raw material with the steeping agent in a vessel wherein the raw material is subjected to a steeping process,
(d) addition of an active substance based on hops and/or tree resin and/or a fatty acid and/or a mixture thereof for the control of lactic acid production during the steeping process,
(e) stripping off the steeping agent,
(f) removal of the steeped raw material,
(g) further processing of the steeped raw material.

12. Method according to Claim 11,
**characterized in that**
the active substance is added to reduce or avoid the addition of a further active substance for the control of lactic acid production.

13. Method according to Claim 12,
**characterized in that**
the further active substance is sulphur dioxide or a compound comprising sulphur dioxide.

14. Method according to Claims 10 - 13,
**characterized in that**
the active substance is added to the steeping agent.

15. Method according to Claims 11 - 14,
**characterized in that**
the steeping process takes place at a pH value in the range of ca. 3.0 - 5.5.

16. Method according to Claims 11 - 15,
**characterized in that**
the steeping process takes place at a temperature in the range of 35°C - 65°C, preferably 40°C - 60°C.

17. Method according to Claims 11 - 16,
**characterized in that**
the active substance is added to the vessel at the steeping agent inlet.

18. Method according to Claims 11 - 17,
**characterized in that**
the active substance is added at intermediate points along the steeping process.

19. Method for the intermediate storage of starch milk that forms within the context of a production process for starch,
**characterized in that**
an active substance based on hops and/or tree resin and/or a fatty acid and/or a mixture thereof is added to the starch milk.

20. Method according to Claim 19,
**characterized in that**
alpha-acids, beta-acids, iso-alpha-acids, dihydroiso-alpha-acids, tetrahydroiso-alpha-acids, hexahydroiso-alpha-acids, hexahydro-beta-acids, rosin, fatty acids, in particular myristic acid or a mixture thereof is added as active substance.

21. Method for the production of starch using a natural cereal raw material, especially barley, rye, oats or wheat with the following process steps
(a) provision of the raw material, especially in milled form,
(b) treatment of the raw material with water for the production of a paste,
(c) possible resting phase of the paste,
(d) separation of the starch and gluten,
(e) further processing of the starch,
wherein an active substance based on hops and/or tree resin and/or a fatty acid or a mixture thereof is added within the sequence of the process steps (a) - (e).

22. Method according to Claim 21,
**characterized in that**
the addition is carried out as replacement or partial replacement for chlorine dioxide or carbamates.

23. Method according to Claim 21 or 22,
**characterized in that**
alpha-acids, beta-acids, iso-alpha-acids, dihydroiso-alpha-acids, tetrahydroiso-alpha-acids, hexahydroiso-alpha-acids, hexahydro-beta-acids, rosin, fatty acids, in particular myristic acid or a mixture thereof is added as active substance.

24. Method for the production of starch using a vegetable raw material, especially the potato or the tapioca plant or the cassava plant, wherein the vegetable raw material is stored between or during the processing stages,
**characterized in that**
an active substance based on hops and/or tree resin and/or a fatty acid or a mixture thereof is added to the vegetable raw material.

25. Method according to Claim 24,
**characterized in that**
the addition of the active substance is carried out as replacement or partial replacement of sulphur dioxide or compounds comprising sulphur dioxide.

26. Method according to Claim 24 or 25,
**characterized in that**
the addition takes place as part of the addition of water to improve the pumpability of the chopped potato pieces (mash) or of the chopped tuber pieces of the tapioca plant or the cassava plant.

27. Method according to Claims 24 - 26,
**characterized in that**
the addition of the active substance is carried out for the suppression of grampositive anaerobic (clostridia), microaerophilic and/or facultative anaerobic contaminants (lactic acid bacteria, bacilli).

28. Method according to Claims 24 - 27,
**characterized in that**
the addition of the active substance is carried out for control of lactic acid production.

## Revendications

1. Procédé de production d'amidon en utilisant une matière première végétale à partir de laquelle l'amidon doit être obtenu, **caractérisé en ce que** pendant le procédé de production, on ajoute une substance active à base de houblon et/ou de résine naturelle et/ou d'un acide gras ou d'un mélange de ceux-ci.

2. Procédé selon la revendication 1, **caractérisé en ce que** l'on prévoit comme matière première végétale du maïs et **en ce que** pour le stockage du maïs, on ajoute une substance active à base de houblon et/ou de résine naturelle et/ou d'un acide gras ou d'un mélange de ceux-ci.

3. Procédé selon la revendication 2, **caractérisé en ce qu'**il s'agit concernant le maïs de maïs humide.

4. Procédé selon la revendication 2 ou 3, **caractérisé en ce que** la substance active est pulvérisée sur le maïs à stocker.

5. Procédé selon la revendication 4, **caractérisé en ce que** la pulvérisation de la substance active se déroule pendant le remplissage du réservoir de stockage avec le maïs.

6. Procédé selon la revendication 2 ou 3, **caractérisé en ce que** la substance active est chargée sur le maïs à stocker au moyen d'un bain de trempage.

7. Procédé selon la revendication 1 ou 2, **caractérisé en ce que** l'ajout de la substance active se fait en tant que substitution partielle de dioxyde de soufre ou de composés renfermant du dioxyde de soufre,

8. Procédé selon la revendication 1, **caractérisé en ce que** l'ajout de la substance active se fait en tant que substitution totale de dioxyde de soufre ou de composés renfermant du dioxyde de soufre.

9. Procédé selon l'une des revendications précédentes, **caractérisé en ce que** par l'ajout de la substance active, on contrôle la production d'acide lactique dans le cadre du procédé de production.

10. Procédé selon l'une des revendications précédentes, **caractérisé en ce qu'**il s'agit concernant la substance active d'acides alpha, d'acides bêta, d'iso-alpha-acides, de dihydroisoalpha-acides, de tétrahydroiso-alpha-acides, d'hexahydroiso-alpha-acides, d'hexahydro-bêta-acides, de colophane, d'acides gras, en particulier d'acide myristique, ou d'un mélange de ceux-ci.

11. Procédé de production d'amidon en utilisant une matière première végétale, en particulier du maïs, comportant les étapes de procédé suivantes :
(a) mise à disposition de la matière première,
(b) mélange de la matière première avec un agent gonflant,
(c) stockage de la matière première avec l'agent gonflant dans un réservoir, la matière première étant alors soumise à un processus de gonflement,
(d) ajout d'une substance active permettant le contrôle de la production d'acide lactique pendant le processus de gonflement, à base de houblon et/ou de résine naturelle et/ou d'un acide gras ou d'un mélange de ceux-ci,
(e) retrait de l'agent gonflant,
(f) enlèvement de la matière première gonflée,
(g) transformation de la matière première gonflée.

12. Procédé selon la revendication 11, **caractérisé en ce que** l'ajout de la substance active est entreprise pour réduire ou éviter l'ajout d'une autre substance active permettant de contrôler la production d'acide lactique.

13. Procédé selon la revendication 12, **caractérisé en ce qu'**il s'agit concernant l'autre substance active de dioxyde de soufre ou d'un composé contenant du dioxyde de soufre.

14. Procédé selon les revendications 10 à 13, **caractérisé en ce que** la substance active est ajoutée à l'agent gonflant.

15. Procédé selon les revendications 11 à 14, **caractérisé en ce que** le procédé de gonflement se déroule à une valeur de pH comprise dans la gamme allant d'environ 3,0 à 5,5.

16. Procédé selon les revendications 11 à 15, **caractérisé en ce que** le procédé de gonflement se déroule à une température comprise dans la gamme allant de 35 °C à 65 °C, de préférence de 40 °C à 60 °C.

17. Procédé selon les revendications 11 à 16, **caractérisé en ce que** la substance active est ajoutée dans le réservoir au niveau de l'introduction de l'agent gonflant.

18. Procédé selon les revendications 11 à 17, **caractérisé en ce que** la substance active est ajoutée au niveau de positions intermédiaires le long du processus de gonflement.

19. Procédé de stockage intermédiaire de lait d'amidon qui est produit dans le cadre d'un procédé de production d'amidon, **caractérisé en ce qu'**au lait d'amidon est ajoutée une substance active à base de houblon et/ou de résine naturelle et/ou d'un acide gras, ou d'un mélange de ceux-ci.

20. Procédé selon la revendication 19, **caractérisé en ce que** l'on ajoute en tant que substance active des acides alpha, des acides bêta, des iso-alpha-acides, des dihydroisoalpha-acides, des tétrahydroiso-alpha-acides, des hexahydroiso-alpha-acides, des hexahydro-bêta-acides, de la colophane, des acides gras, en particulier de l'acide myristique, ou un mélange de ceux-ci.

21. Procédé de production d'amidon en utilisant une matière première de céréale naturelle, en particulier d'orge, de seigle, d'avoine ou de blé, comportait les étapes de procédé suivantes :
(a) mise à disposition de la matière première, en particulier sous forme broyée,
(b) mélange de la matière première avec de l'eau pour fabriquer une pâte,
(c) éventuellement phase de repos de la pâte,
(d) séparation de l'amidon et du gluten ;
(e) traitement ultérieur de l'amidon,
où une substance active à base de houblon et/ou de résine naturelle et/ou d'un acide gras, ou d'un mélange de ceux-ci, est ajoutée dans la plage des étapes de procédé (a) - (e).

22. Procédé selon la revendication 21, **caractérisé en ce que** l'ajout se fait en tant que substitution ou substitution partielle de dioxyde de chlore ou de carbamates,

23. Procédé selon la revendication 21 ou 22, **caractérisé en ce que** l'on ajoute en tant que substance active des acides alpha, des acides bêta, des iso-alpha-acides, des dihydroisoalpha-acides, des tétrahydroiso-alpha-acides, des hexahydroiso-alpha-acides, des hexahydro-bêta-acides, de la colophane, des acides gras, en particulier de l'acide myristique, ou un mélange de ceux-ci.

24. Procédé de production d'amidon en utilisant une matière première végétale, en particulier la pomme de terre de tapioca ou de plante de cassave, dans lequel la matière première végétale est stockée entre ou pendant les étapes de transformation, **caractérisé en ce que** l'on ajoute à la matière première végétale une substance active à base de houblon et/ou de résine naturelle et/ou d'un acide gras ou d'un mélange de ceux-ci.

25. Procédé selon la revendication 24, **caractérisé en ce que** l'ajout de la substance active se fait en tant que substitution ou substitution partielle de dioxyde de soufre ou de composés contenant du dioxyde de soufre.

26. Procédé selon la revendication 24 ou 25, **caractérisé en ce que** l'ajout se déroule dans le cadre de l'ajout d'eau pour améliorer l'aptitude au pompage des morceaux de pomme de terre broyés (morceaux râpés) ou des morceaux de tubercules broyés du tapioca ou de la plante de cassave.

27. Procédé selon les revendications 24 à 26, **caractérisé en ce que** l'ajout de la substance active se fait pour réfréner les bactéries anaérobies Gram positif (clostridium), les contaminants microaérophiles et/ou facultativement anaérobies (bactéries d'acide lactique, bacilles).

28. Procédé selon les revendications 24 à 27, **caractérisé en ce que** l'ajout de la substance active se fait pour contrôler le développement de l'acide lactique.
